# EUROPEAN PATENT APPLICATION

(11) **EP 4 799 860 A1**
(43) Date of publication of application: **02.09.2026**
(21) Application number: 25315066.8
(22) Date of filing: 27.02.2025
(51) Int. Cl.: B60N 2/64, B60N 2/70

(54) **AN ASSEMBLY, PARTICULARLY FOR A VEHICLE**

(71) Applicant: JSP International SARL, 60190 Estrées-Saint-Denis (FR)
(72) Inventor: Guenet, Mathieu, 60190 Estrées-Saint-Denis (FR)
(74) Representative: Hafner & Kohl PartmbB

(57) **Abstract**

An assembly, particularly for a vehicle.

## Description

The invention relates to an assembly, particularly for a vehicle.

Assemblies, particularly assemblies for vehicles, are used in different technological fields and generally known in the prior art.

As a non-limiting example, assemblies are used in the technological field of vehicle engineering, particularly automotive engineering, where they serve different functions. Respective assemblies thus, exhibit properties which can result from an energy absorption device or an energy absorption member, respectively which is made of or comprises a material or material structure, such as e.g. a cellular material or a cellular material structure, having energy absorption properties.

According to a concrete, yet non-limiting example, respective assemblies can form part of so-called anti-submarining seat assemblies. Respective anti-submarining seat assemblies typically, comprise a forward-facing (with respect to the normal forward drive direction of a vehicle), upwardly-inclined ramp-like energy absorbing device which is to be arranged in the base of a seat of a vehicle such that a passenger will be, particularly due to the arrangement and/or geometry of the energy absorbing device, in the event of a crash of the vehicle, pushed into the seat cushion and inhibited from slipping under a restraint, such as e.g. a belt, which reduces the risk of injury. An energy absorbing device of an assembly can thus, be or comprise a so-called anti-submarining ramp which forms, in addition to one or more structural devices, which typically, serve(s) for connecting the energy absorbing device with a vehicle structure, such as e.g. a vehicle body, an essential part of a respective anti-submarining seat assembly.

Hence, known assemblies typically, comprise an energy absorbing device and a structural device which need to be assembled.

However, diverse constructions of respective assemblies show drawbacks with respect to their assembly, which assembly oftentimes comprises, in a molding tool, molding respective energy absorbing devices around respective structural devices which have been previously provided as inserts within a cavity of the molding tool. Such molding approaches typically require complex molding tool constructions.

In view of the above, there is a need for an assembly, which has an improved configuration with respect to the possibilities for its assembling and connecting, respectively a respective energy absorbing device with a respective structural device.

It is therefore, the objective of the present invention to provide an improved assembly which overcomes at least some of the drawbacks specified above.

The objective is achieved by an assembly of independent claim 1. The features of the dependent claims refer to possible exemplary embodiments of the assembly of independent claim 1.

A first aspect of the invention refers to an assembly, particularly for a vehicle, more particularly for a car. The assembly can have one or more functions.

As an example, the assembly can have an energy absorbing function. As such, the assembly can be generally, configured to absorb energy. As such, the assembly can also be deemed or denoted energy absorbing assembly. Depending on its concrete application, the energy to be absorbed by the assembly can be generated in a situation of a crash, collision, impact, etc. of a superordinate unit which is provided with the assembly, for example. A non-limiting example of a respective superordinate unit is a vehicle, particularly a car, such that the energy to be absorbed by the assembly can be generated in a situation of a crash, collision, impact, etc. of a vehicle, particularly a car, for example. Yet, additional or alternate functions than an energy absorbing function are contemplated.

The assembly comprises an energy absorbing device. In exemplary embodiments, the energy absorbing device can also be deemed or denoted energy absorbing member. The energy absorbing device can extend in a first spatial direction (x-direction), a second spatial direction (y-direction) transverse to the first spatial direction, and a third spatial direction extending transverse to both the first and second spatial directions (z-direction).

As will be apparent from further below, the energy absorbing device can have energy absorbing properties as it can be built from or comprise a material or material structure, respectively, namely a cellular material or a cellular material structure, respectively which has energy absorbing properties. As such, the energy absorbing device can serve at least an energy absorbing function.

The energy absorbing device comprises a base body. The base body can extend in the first spatial direction (x-direction), the second spatial direction (y-direction) transverse to the first spatial direction, and the third spatial direction extending transverse to both the first and second spatial directions (z-direction). The base body can comprise one or more top portions, one or more side portions, one or more bottom portions. Each of the one or more top portions, side portions, and bottom portions can comprise a main extension plane. Each of the one or more top portions, side portions, and bottom portions can comprise one or more walls or wall portions. Respective walls or wall portions can define the respective main extension plane of the respective one or more top portions, one or more side portions, and one or more bottom portions. Respective one or more top portions and respective one or more bottom portions can be arranged substantially opposite to each other. Likewise, one or more first side portions and one or more second side portions can be arranged substantially opposite to each other. Respective one or more side portions can be arranged with their respective main extension plane at an angle of 15° to 165°, particularly at an angle of (ca.) 90°, relative to the main extension plane of the one or more top portions and/or relative to the main extension plane of the one or more bottom portions. As such, in exemplary embodiments, the base body can have a substantially parallelepiped base shape. For the exemplary embodiment of a base body with a substantially parallelepiped base shape, the first direction can correspond to a width or length direction of the base body, the second direction can correspond to a length or width direction of the base body, and the third direction can correspond to a height direction of the base body. Analogous considerations apply for other base shapes of the base body. Of course, the concrete base shape of the base body will be defined with respect to a concrete application of the assembly.

The base body is typically, made of or comprises an expanded cellular polymer material, particularly an expanded cellular polyolefin material, or an expanded cellular polymer material structure, particularly an expanded cellular polyolefin material structure. A respective expanded cellular polymer material and a respective expanded cellular polymer material structure typically, comprises amongst other characteristic properties - such as e.g. a low density, a low weight, a high stiffness-to-weight ratio, and anti-corrosion properties - energy absorbing properties. These energy absorbing properties can result in energy absorbing properties of the base body and further in energy absorbing properties of the energy absorbing device.

The base body can be a molded part, particularly a part made by molding, particularly by temperature-induced dry or wet molding, of an expandable or expanded cellular polymer material. Non-limiting examples of an expandable or expanded cellular polymer materials are olefin-based expandable or expanded cellular polymer materials such as polyethylene-based materials (ePE) and/or polypropylene-based materials (ePP) and/or olefinic thermoplastic-elastomers-based material (eTPO), styrene-based expandable or expanded cellular polymer materials such as polystyrene-based materials (ePS) and/or acrylonitrile -butadiene-styrene-based materials (eABS) and/or styrene acrylonitrile-based materials (eSAN), ester-based expandable or expanded cellular polymer materials, such as polycarbonate-based materials (ePC), polyethylene-terephthalate-based materials (ePET) and/or polybutylene terephthalate-based materials (ePBT) and/or polylactic-acid-based materials (ePLA) and/or polyhydroxyalkanoate based materials (ePHA), amide-based expandable or expanded cellular polymer materials such as polyamide based materials (ePA-materials), urethane-based expandable or expanded cellular polymer materials such as thermoplastic polyurethane-based materials (eTPU-materials), ether-based expandable or expanded cellular polymer materials such as polyphenylene-ether-based materials (ePPE). Further, expandable or expanded cellular polymers based on mixtures and/or blends and/or copolymer of at one or more of the aforementioned compositions are also conceivable. From the aforementioned list, the use of ePP, ePA, ePE, or ePET is preferred, particularly the use of ePP and/or ePE is preferred as experiments showed that these materials showed outstanding properties for the intended purpose. Respective expandable or expanded cellular polymers can comprise one or more recycled polymers, particularly recycled polyolefins. Respective expandable or expanded cellular polymers can comprise one or more functional agents or additives, such as e.g. reinforcing agents or additives, coloring agents or additives, etc. In a preferred example, the base body is integrally molded from at least one of: ePP, ePA, ePE, or ePET.

The assembly further comprises at least one structural device. In exemplary embodiments, the at least one structural device can also be deemed or denoted structural member The at least one structural device can provide one or more functions, such as e.g. a connecting function of connecting the energy absorbing device with a respective superordinate unit, e.g. with a body of a vehicle, an load absorbing function of absorbing static or dynamic (mechanical) forces, loads, vibrations etc., a load introducing function of introducing static or dynamic (mechanical) forces, loads, vibrations, etc. into the energy absorbing device, etc. The dimensions of the at least one structural device can extend beyond the dimensions of the base body in one or more spatial directions. The at least one structural device can preferably be made from a material stiffer than the cellular polymer material of the base body. The at least one structural device is preferably made from a stiff material such as e.g. a metal including iron, iron alloys, copper, copper alloys, aluminum and/or aluminum alloys or a resin material or a ceramic material.

The at least one structural device can comprise one or more portions which extend, at least in the assembled state of the assembly in which the at least one structural device is connected to the base body in an intended manner, in a first spatial direction (x-direction), a second spatial direction (y-direction) transverse to the first spatial direction, and a third spatial direction extending transverse to both the first and second spatial directions (z-direction). At least one of: the first spatial direction, the second spatial direction, and the third spatial direction of the at least one structural device can correspond to at least one of: the first spatial direction, the second spatial direction, and the third spatial direction of the base body in the assembled state of the assembly.

As an example, the at least one structural device can be or comprise a frame structure comprising one or more longitudinal frame structure elements, such as e.g. beams, webs, etc., extending in two or more spatial directions, particularly in a common plane. The frame structure can thus, have a configuration with one or more first longitudinal frame structure elements, such as beams, webs, etc., extending in a first spatial direction and one more second longitudinal frame structure elements, such as beams, webs, etc., extending in a second spatial direction, which can be transverse to the first spatial direction. Notably, the first spatial direction can substantially correspond to the first spatial direction of the base body and the second spatial direction can substantially correspond to the second spatial direction of the base body at least in the assembled state of the assembly. Such a configuration of a frame structure can be deemed or denoted a grid-configuration. In either case, the frame structure can be configured, e.g. due to its geometric configuration and/or arrangement within the assembly, to provide at least one of the aforementioned functions. The frame structure can be a metal frame structure, particularly a metal wire frame structure, more particularly a grid-configuration metal wire frame structure, even more particularly a grid-configuration steel wire frame structure.

As another example, the at least one structural device can be or comprise a plate structure comprising one or more plate structure elements extending in one or more spatial directions, particularly in a common plane. In either case, the plate structure can be configured, e.g. due to is geometric configuration and/or arrangement within the assembly, to provide at least one of the aforementioned functions. The plate structure can be a plate structure made from a stiff material such as e.g. a metal including iron, iron alloys, copper, copper alloys, aluminum and/or aluminum alloys or a resin material or a ceramic material, more particularly a steel plate structure.

The base body is provided with or comprises at least one receiving portion configured to at least partly receive at least one portion, e.g. a respective first or second longitudinal frame structure element, of the at least one structural device. Particularly, the base body is provided with or comprises at least one receiving portion configured to at least partly receive at least one portion of the at least one structural device such that when the at least one portion of the at least one structural device is at least partly received in the at least one receiving portion, the at least one portion of the at least one structural device is secured against motion in at least two degrees of freedom of motion. More particularly, the base body is provided with or comprises at least one receiving portion configured to at least partly receive at least one portion of the at least one structural device such that when the at least one portion of the at least one structural device is at least partly received in the at least one receiving portion, the at least one portion of the at least one structural device is secured against motion in at least two degrees of freedom of motion at least in the first spatial direction and in the second spatial direction. The at least one receiving portion can thus, comprise a special configuration which enables, when the at least one portion of the at least one structural device is at least partly received in the at least one receiving portion, that the at least one portion of the at least one structural device is secured against motion in at least two degrees of freedom of motion, particularly at least in the first spatial direction and in the second spatial direction. At least one of the at least two degrees of freedom can be or comprise at least one transfer degree of freedom of motion as will be explained below. Hence, the at least one receiving portion is generally configured to secure the at least one structural device against, particularly undesired, motions in respective degrees of freedom of motion which could compromise the functional integrity of the assembly, for example.

The geometry of the at least one receiving portion can be adapted to the shape of the respective portion of the at least one structural device which is to be received within the at least one receiving portion or the respective portion of the at least one structural device which is factually at least partially received within the at least one receiving portion in a first state as will be described in more detail in the following. As an example, at least one of the length, width or height dimension of the at least receiving portion can be adapted to at least one of the length, width or height dimension of at least the portion of the structural device which is to be received within the at least one receiving portion or the respective portion of the at least one structural device which is factually at least partially received within the at least one receiving portion in the first state as will be described in the following. Likewise, the base shape of the at least one receiving portion can be adapted to the base shape of at least the portion of the at least one structural device which is to be received within the at least one receiving portion or the respective portion of the at least one structural device which is factually at least partially received within the at least one receiving portion in the first state as will be described in the following.

In either case, the at least one receiving portion can be integrally formed with the base body. As such, the at least one receiving portion can be built in a molding process in which the base body is built by molding. Yet, it is generally conceivable that the at least one receiving portion can be a separate component which is attached to the base body or that it is built by machining, e.g. by milling, of the base body.

Further, the base body is provided with or comprises at least one support portion configured to co-act with the at least one structural device, e.g. with at least one respective longitudinal frame structure element, such that the at least one structural device can be transferred, i.e. moved, in at least one transfer degree of freedom of motion in a first state (as indicated above) in which the at least one portion of the at least one structural device is received within at least one receiving portion, particularly within a receiving portion which is, e.g. due to a specific geometry, particularly a specific shape, assigned to the at least one structural device.

In either case, the at least one support portion can be integrally formed with the base body. As such, the at least one support portion can be built in a molding process in which the base body is built by molding. Yet, it is generally conceivable that the at least one support portion can be a separate component which is attached to the base body or that it is built by machining, e.g. by milling, of the base body.

The at least one support portion enables an easy and reliable assembly process of the assembly which comprises, via the at least one support portion, transferring the at least one structural device in the respective first state by moving same in the at least one transfer degree of freedom relative to the base body. Particularly, the at least one support portion can enable an easy and reliable assembly process of the assembly which can comprise, via the at least one support portion, transferring the at least one structural device by moving same in the at least one transfer degree of freedom from a second state in which the at least one portion of the at least one structural device is not received within the at least one receiving portion, into the first state in which the at least one portion of the at least one structural device is at least partially received within the at least one receiving portion.

The at least one support portion can thus, enable a moveable support of the at least one structural device relative to the base body, particularly for transferring the at least one structural device in the first state by moving same in the at least one transfer degree of freedom from a second state in which the at least one portion of the at least one structural device is not received within the at least one receiving portion, into the first state in which the at least one portion of the at least one structural device is at least partially received within the at least one receiving portion.

Hence, the at least one support portion can provide the base body with a kinematic or with a kinematic function which enables a transfer or motion, respectively of the at least one structural device in the at least one transfer degree of freedom of motion in a first state (as indicated above) in which the at least one portion of the at least one structural device is received within at least one receiving portion, particularly within a receiving portion which is, e.g. due to a specific geometry, particularly a specific shape, assigned to the at least one structural device. It is apparent from above that, before transferring the at least one structural device in the first state, the at least one structural device can be in a second state in which the at least one portion of the at least one structural device is not received within the at least one receiving portion.

The at least one support portion can comprise one or more contact points for contacting at least one counter-support portion of the at least one structural device which is to be transferred in the first state. Particularly, respective contact points can be or comprise support points or support areas against which at least one counter-support portion of the at least one structural device can be at least temporarily supported and/or via which the at least one counter-support portion of the at least one structural device can be at least temporarily supported. The at least one structural device can thus, comprise one or more counter-support portions configured to co-act with respective one or more support portions of the base body. A respective counter-support portion of the structural device can be provided with a first and/or second longitudinal frame structure element, for example. Respective contact points or support areas can be define at least one motion axis along which and/or about which the at least one structural device can be moved in the at least one transfer degree of freedom of motion for moving same from the first state to a respective second state or vice versa.

It is apparent from the above that the first state can generally comprise a first orientation and/or position of at least the at least one portion of the at least one structural device which is to be received in the at least one receiving portion or the (entire) structural device, particularly relative to the base body. Likewise, the second state can generally comprise a second orientation and/or position of the at least one portion of the structural device which is to be received in the at least one receiving portion or the (entire) structural device, particularly relative to the base body.

The at least one support portion is thus, configured, e.g. due to a specific geometry, particularly a specific shape, to enable, in connection with an assembly process of the assembly, a concerted motion of the at least one structural device relative to the base body which moves the at least one portion of the at least one structural device into the at least one receiving portion and thus, transfers the at least one structural device in its first state. This enables realizing a novel assembly process of the assembly which does not require complex tool constructions as the assembly process can simply comprise at least temporarily moveably supporting the at least one structural device, particularly via respective one or more counter-support portions, e.g. at the one or more support portions of the base body and conducting the described specific concerted motion of the at least one structural device relative to the base body which moves the at least one portion of the at least one structural device into the at least one receiving portion of the base body and thus, transfers the at least one structural device in its first state.

Notably, the assembly process of the assembly can be done manually, e.g. via assembly personnel, and/or automatically, e.g. via one or more assembly robots.

Particularly, the at least one support portion of the base body can be built as or comprise at least one projection projecting off the base body in at least one spatial direction, particularly at least in the first and/or second direction. Particularly, the base body can be provided with multiple distinct support portions and projections, respectively. The multiple distinct support portions and projections, respectively can be arranged in a line, e.g. in a straight line, on the same side of the base body. The line can extend in the first or second direction, for example. The line can be continuous, (quasi)continuous, or discontinuous. The base body can thus, comprise multiple distinct support portions and projections, respectively which are adjacently arranged in a line, e.g. in a straight line, on the same side of the base body. The line can extend in the first or second direction along at least 50% of the spatial extension of the respective side of the base body, for example. In such a configuration, the spatial extension of each of the projections along the respective side of the base body is less than 50% of the spatial extension of the respective side of the base body. Likewise, the base body can comprise at least one continuous projection which extends along at least 50% of the spatial extension of the respective side of the base body. In either case, the arrangement and design of the one or more projections can define a motion axis along which and/or about which the at least one structural device can be moved so as to transfer it into the first state.

In exemplary embodiments of the assembly, the at least one transfer degree of freedom of motion can be or comprise a translational degree of freedom of motion along a translational axis and/or a rotational degree of freedom of motion about a rotational axis. As such, the at least one support portion can be configured to co-act with the at least one structural device such that the at least one structural device can be moved in at least one translational and/or rotational degree of freedom of motion in the first state in which the at least one portion of the at least one structural device is received within at least one receiving portion.

A respective translational degree of freedom can comprise a translational motion, such as e.g. a sliding motion, of at least one portion of the structural device, such as e.g. a longitudinal first or second frame structure element, into the at least one receiving portion, thereby transferring the at least one structural device in the first state. A respective translational axis can e.g. extend in at least one of the first spatial direction, the second spatial direction, and the third spatial direction, for example. A respective translational axis can be defined by the at least one support portion of the base body and/or by at least one respective counter-support portion of the at least one structural device, for example. Yet, it is also conceivable that a respective translational axis can be defined otherwise, e.g. by a portion of an assembly device used for assembling the assembly, particularly for transferring the at least one structural device in the first state.

A respective rotational degree of freedom can comprise a rotational motion, such as e.g. a pivot motion, of at least one portion of the at least one structural device, such as e.g. a longitudinal first or second frame structure element, into the at least one receiving portion, thereby transferring the at least one structural device in the first state. A respective rotational axis can e.g. extend in at least one of the first spatial direction, the second spatial direction, and the third spatial direction, for example. A respective rotational axis can be defined by the at least one support portion of the base body and/or by at least one respective counter-support portion of the at least one structural device, for example. Yet, it is also conceivable that a respective rotational axis can be defined otherwise, e.g. by a portion of an assembly device used for assembling the assembly, particularly for transferring the at least one structural device in the first state. Experiments have shown that a rotational transfer degree of freedom of motion can be beneficial and thus, preferred because it allows for a better securing of the structural device within the assembly, e.g. in the scenario of a crash of a vehicle, as the crash typically rather leads to a translational motion than a rotational motion. As such, it is preferable that the at least one transfer degree of freedom of motion is or comprises a rotational degree of freedom of motion about a rotational axis.

It is conceivable that the at least one structural device is moveable in two different transfer degrees of freedom of motion e.g. for transferring it into the first state or out of the first state. As such, it is conceivable that a combined motion of the at least one structural device in two different transfer degrees of freedom of motion is required for transferring it into the first state and/or out of the first state.

As an example, the at least one structural device can be moveable supported in a first translational degree of freedom of motion and in a second translational degree of freedom of motion, which can be different from the first translational degree of freedom of motion. As a more concrete example, the first translational degree of freedom of motion can comprise a motion along a first translation axis, e.g. extending in at least one of the first direction, the second direction, and the third direction, and the second translational degree of freedom of motion can comprise a motion along a second translation axis, e.g. extending in at least one of the first direction, the second direction, and the third direction, which is different from the first translation axis. At least one motion of the at least one structural device can comprise a motion of at least one portion of the at least one structural device which is already received in the receiving portion. Thus, a respective first translational motion can comprise a motion of at least one portion of the at least one structural device into the receiving portion and a respective second translational motion can comprise a translational motion of the or at least one portion of the at least one structural device within the receiving portion. As such, a respective second translational degree of freedom of motion can comprise a translation motion of at least one of portion of the at least one structural device within the receiving portion. In such a manner, an engagement element, such as e.g. a hook, provided with the at least one structural device can be engaged with a corresponding counter engagement element, such as e.g. a receptacle, provided with the base body, for example.

As another example, the at least one structural device can be moveable supported in a first rotational degree of freedom of motion and in a second rotational degree of freedom of motion, which can be different from the first rotational degree of freedom of motion. As a more concrete example, the first rotational degree of freedom of motion can comprise a motion along about a first rotation axis, e.g. extending in at least one of the first direction, the second direction, and the third direction, and the second rotational degree of freedom of motion can comprise a motion about a second rotation axis, e.g. extending in at least one of the first direction, the second direction, and the third direction, which is different from the first rotation axis. At least one motion of the at least one structural device can comprise a motion of at least one portion of the at least one structural device which is already received in the receiving portion. Thus, a respective first rotational motion can comprise a motion of at least one portion of the at least one structural device into the receiving portion and a respective second rotational motion can comprise a rotational motion of the or at least one portion of the at least one structural device within the receiving portion. As such, a respective second rotational degree of freedom of motion can comprise a rotation motion of at least one of portion of the at least one structural device within the receiving portion. In such a manner, an engagement element, such as e.g. a hook, provided with the at least one structural device can be engaged with a corresponding counter engagement element, such as e.g. a receptacle, provided with the base body, for example.

As another example, combined translational and rotational motions of the at least one structural device are possible. As such, a respective first degree of freedom of motion can comprise a translational motion along a translational axis, e.g. extending in at least one of the first direction, the second direction, and the third direction, and a second degree of freedom of motion can comprise a rotational motion about a rotation axis, e.g. extending in at least one of the first direction, the second direction, and the third direction, or vice versa. As an example, a respective first motion can comprise a motion of at least one portion of the at least one structural device into the receiving portion and a respective second motion can comprise a translational or rotational motion of the at least one portion of the at least one structural device within the receiving portion. In such a manner, an engagement element, such as e.g. a hook, provided with the at least one structural device can be engaged with a corresponding counter engagement element, such as e.g. a receptacle, provided with the base body, for example.

It is apparent from the above, that the at least one structural device can comprise, in further exemplary embodiments of the assembly, at least one engagement element, such as e.g. a hook, which is configured to engage with or to be engaged with a corresponding counter engagement element, such as e.g. a receptacle, provided with the base body.

In further exemplary embodiments of the assembly, the at least one receiving portion can be built as or comprise at least one groove or groove-like recess. As such, the base body can be provided with or comprise one or more grooves or groove-like recesses which serve as a respective receiving portion. Respective grooves or groove-like recesses can be provided with a freely exposed surface of the base body. Particularly respective grooves or groove-like recesses can be provided with at least one freely exposed surface of a top portion, a side portion or a bottom portion of the base body, for example.

In further exemplary embodiments of the assembly, respective grooves or groove-like recesses can extend in at least one of the first spatial direction, the second spatial direction, and the third spatial direction, for example. Particularly, respective groove or groove-like recesses can, in any case, extend in the third spatial direction (to define a depth dimension) and in at least one of the first and the second direction (to define a longitudinal dimension). As such, the at least one receiving portion typically, has an extension in the third spatial direction which enables that the at least one portion of the at least one structural device, which can be or comprise a longitudinal frame structure element, such as e.g. a beam, in an exemplary embodiment of the frame structure, can be received and secured against a motion in the at least one two degrees of freedom of motion. Respective grooves or groove-like recesses can thus, generally extend in at least one or more different spatial directions. As such, respective grooves or groove-like recesses do not necessarily have a straight shape. Respective grooves or groove-like recesses can thus, have at least one of: one or more straight portions, one or more curved portions, one or more inclined portions, for example.

It is also conceivable that respective grooves or groove-like recesses can extend at an angle, e.g. an acute angle, a right angle, or an obtuse angle, relative to at least one of the first spatial direction, the second spatial direction, and the third spatial direction.

In further exemplary embodiments of the assembly, respective grooves or groove-like recesses can comprise a varying cross-sectional geometry. Particularly, respective grooves or groove-like recesses can comprise a tapering cross-sectional geometry which tapes from an opening portion towards a bottom portion of the respective groove or groove-like recess. Respective grooves or groove-like recesses can therefore, have a T- or V-shaped cross-sectional geometry, for example. Other cross-sectional shapes are contemplated.

In further exemplary embodiments of the assembly, the base body can comprise multiple receiving portions (substantially) extending in the same direction or in different directions. As such, the base body can be provided with or comprise an arrangement of receiving portions (substantially) extending in the same direction or in different directions. As an example, at least two, more than two or all receiving portions can be (substantially) arranged and extend in parallel.

Particularly, at least two, more than two or all receiving portions can be (substantially) arranged and extend in parallel in the first spatial direction or in the second spatial direction. Additionally or alternatively, at least two, more than two or all receiving portions can be (substantially) arranged and extend in an angle different 180°, e.g. at at least one of: an acute angle, a right angle, or an obtuse angle, relative to each other. In a particular example, at least two, more than two or all receiving portions can be (substantially) arranged and extend in a right angle (90°). When at least two receiving portions are arranged and extend in a right angle towards each other, a higher degree of securing a respective portion of the at least one structural device can be achieved. With respect to their respective extension in the third direction (depth direction), at least two, more than two or all receiving portions can have the same or a different extension. As such, the at least two, more than two or all receiving portions can have the same or a different depth. In either case, the depth of a respective receiving portion can be related with a degree of securing a respective portion of the at least one structural device against undesired removal from the respective receiving portion. Typically, bigger depths can provide a higher degree of securing a respective portion of the at least one structural device against undesired removal from the respective receiving portion. As an example, one or more receiving portions can have a depth of at least 1 cm, particularly at least 2 cm, more particularly at least 3 cm, more particularly at least 4 cm, more particularly at least 5 cm.

In further exemplary embodiments of the assembly, the base body can be provided with or comprise at least one locking element assigned to the at least one receiving portion. The at least one locking element can be configured to detachably lock the at least one portion of the at least one structural device, particularly a longitudinal portion of the at least one structural device such as e.g. a longitudinal frame structure element, such as e.g. beam, a web, etc., which is, in the first state, received in the at least one receiving portion, within the at least one receiving portion. Particularly, the at least one locking element can be configured to detachably lock a portion of the at least one structural device received in the at least one receiving portion within the at least one receiving portion, against a motion in at least one degree of freedom of motion, particularly against a motion with which the at least one structural device could be moved out of the at least one receiving portion, such as e.g. a translational motion in the third direction. The at least one degree of freedom of motion can comprise the same or a different degree of freedom of motion as the one against which the at least one portion of the at least one structural device is secured in the first state. More particularly, the at least one locking element can be configured to detachably lock a portion of the at least one structural device received in the at least one receiving portion within the at least one receiving portion, against any motion such that the portion of the at least one structural device is fully secured within the at least one receiving portion which means that the portion of the at least one structural device is not only secured with respect to an undesired loss but also secured with respect to its orientation and/or position within the at least one receiving portion.

In further exemplary embodiments of the assembly, the at least one locking element can be or comprise a positive-locking element, particularly comprising a projection, at least partly extending, e.g. in at least one of the first direction, the second direction and the third direction, into a receiving space defined by the at least one receiving portion. A respective positive-locking element can be or comprise a snap-fit element, for example. A respective snap-fit element can be a projection projecting of a wall of the base body or a recess provided with a wall of the base body, for example. Particularly, a respective snap-fit element can be a projection projecting of a wall of the base body or a recess provided with a wall of the base body which extends which extends in at least one of the first direction, the second direction and the third direction.

Yet, in other exemplary embodiments of the assembly, one or more other locking elements such as e.g. clamps, screws, bolts, etc. are conceivable.

In further exemplary embodiments of the assembly, the at least one locking element can be integrally formed with the base body which can be effected during molding of the base body, for example. As such, the base body can be provided with a respective locking function through molding which also allows for a stable attachment of the at least one locking element to the base body. Yet, it is generally conceivable that a respective locking element can be a separate component which is attached to the base body.

In a particularly preferred embodiment of the assembly, the at least one locking element is a snap-fit element which is integrally formed within the base body. In such a case, it is possible to securely embed and integrate the structural element into the base body without addition of time-consuming and costly process steps, such as e.g in-mold overmolding of the structural element or securing of the structural element within the at least one receiving portion by screwing, bolting, resin casting, etc.

In further exemplary embodiments of the assembly, the assembly can be configured as a component of a vehicle, particularly of a car. Particularly, the assembly can be configured as an anti-submarining ramp of a vehicle, particularly a car, or at least as a part of an anti-submarining ramp of a vehicle, particularly a car. As indicated above, a respective anti-submarining ramp can form part of a an anti-submarining seat assembly which typically, comprises a forward-facing (with respect to the normal forward drive direction of a vehicle), upwardly-inclined ramp-like energy absorbing device which is to be arranged in the base of a seat of a vehicle such that a passenger will be, particularly due to the arrangement and/or geometry of the energy absorbing device, in the event of a crash of the vehicle pushed into the seat cushion and inhibited from slipping under a restraint, such as e.g. a belt, which reduces the risk of injury. With respect to such an anti-submarining seat assembly, the energy absorbing device of the assembly can thus, be or comprise an anti-submarining ramp and the at least one structural device can serve for reinforcing the anti-submarining ramp and/or for connecting the energy absorbing device with a vehicle structure, such as e.g. a vehicle body.

Particularly, an anti-submarining seat assembly can comprise a seat bottom which may include an anti-submarining ramp and a cushion. The cushion may cover the anti-submarining ramp. The anti-submarining ramp may be stiffer, i.e., require a greater force to compress than the cushion. The shape of the anti-submarining ramp may slope upward in a seat-forward direction (forward drive direction). The anti-submarining ramp may optionally include a crest at a maximum height of the anti-submarining ramp. The crest may be disposed more than halfway forward relative to the seat bottom. Further, the crest of the anti-submarining ramp may be positioned below thighs and forward of hips of an occupant who is 50th percentile in height. The anti-submarining ramp may extend across a front end of the seat bottom in a lateral direction relative to the seat.

Yet, in other exemplary embodiments of the assembly, the assembly can be configured as a head rest or a foot rest of a vehicle, particularly a car, or at least as a part of a head rest or a foot rest of a vehicle, particularly a car. Other applications of the assembly are conceivable.

In further exemplary embodiments of the assembly, the assembly can comprise at least one fastening element, wherein the at least one fastening element is configured to fasten, particularly detachably fasten, the at least one energy absorbing device, particularly the base body, to a structure of the or a vehicle, particularly a car, which is intended to include or which includes the assembly. Respective fastening elements can be or comprise wire elements, e.g. for a front and rear fastening of the assembly with a superordinate unit, such as e.g. a vehicle. One, more, or all respective fastening elements can be provided with the at least one structural device. The at least one structural device can thus, comprise portions, e.g. clamp-shaped portions, hook-shaped portions, etc., which act as respective fastening elements configured to detachably fasten the energy absorbing device, particularly the base body, to a structure of the or a vehicle, particularly a car, which is intended to include or which includes the assembly. When the at least one fastening element is fastened, the structural device can be secured in multiple degrees of freedom of motion, particularly all degrees of freedom of motion, within the vehicle, so that the structural device cannot be removed from the vehicle, particularly a car, particularly in the event of a crash.

A second aspect of the invention refers to an energy absorbing device for an assembly of the first aspect of the invention. All annotations concerning the assembly of the first aspect of the invention also apply to the energy absorbing device of the second aspect of the invention and vice versa. Therefore, the energy absorbing device can extend in a first spatial direction (x-direction), a second spatial direction (y-direction) transverse to the first spatial direction, and a third spatial direction extending transverse to both the first and second spatial directions (z-direction). The energy absorbing device can comprise a base body made from an expanded cellular polymer material, wherein the base body is provided with at least one receiving portion configured to at least partly receive at least one portion of at least one structural device, particularly a longitudinal frame structure element, such as e.g. a beam, of a frame structure, such that when the at least one portion of the at least one structural device is at least partly received in the at least one receiving portion, the at least one portion of the at least one structural device is secured against motion in at least two degrees of freedom of motion, particularly in the first spatial direction and in the second spatial direction. Further, the base body can be provided with at least one support portion configured to co-act with the at least one structural device such that the at least one structural device can be transferred, particularly moved, in at least one transfer degree of freedom of motion in a first state in which the at least one portion of the at least one structural device is received within at least one receiving portion, particularly a receiving portion which is, e.g. due to a specific geometry, assigned to the at least one structural device and the respective at least one portion of the at least one structural device, respectively.

A third aspect of the invention refers to a vehicle, particularly a car, comprising at least one assembly of the first aspect of the invention. All annotations concerning the assembly of the first aspect of the invention also apply to the vehicle of the third aspect of the invention and vice versa.

A fourth aspect of the invention refers to a method of assembling the assembly according to the first aspect of the invention. All annotations concerning the assembly of the first aspect of the invention also apply to the method of the fourth aspect of the invention and vice versa. The method comprises at least: at least one receiving step in which at least one portion of a structural device, particularly a beam of a frame structure, is at partly received in at least one receiving portion of the base body of the energy absorbing device such that the at least one portion of the at least one structural device is secured against motion in at least two degrees of freedom of motion, particularly in the first spatial direction and/or in the second spatial direction. The receiving step may thus, comprise transferring the at least one structural device in at least one transfer degree of freedom of motion in a first state in which the at least one portion of the at least one structural device, which can be or comprise a longitudinal frame structure element, such as e.g. a beam, is received within at least one receiving portion, particularly a receiving portion which is, e.g. due to a specific geometry, assigned to the at least one structural device and the respective portion of the at least one structural device, respectively.

Optionally, the method may further comprise a step of locking the at least one structural device within the at least one receiving portion. The locking may be accomplished via one or more respective locking elements

With these and other advantages and features that will become hereinafter apparent, a more complete understanding of the invention can be obtained by referring to the following description of the appended drawings in which:
Fig. 1 - 4 each show a principle drawing of an assembly according to an exemplary embodiment; and
Fig. 5 is a principle drawing of a vehicle which is equipped with an assembly according to an exemplary embodiment.

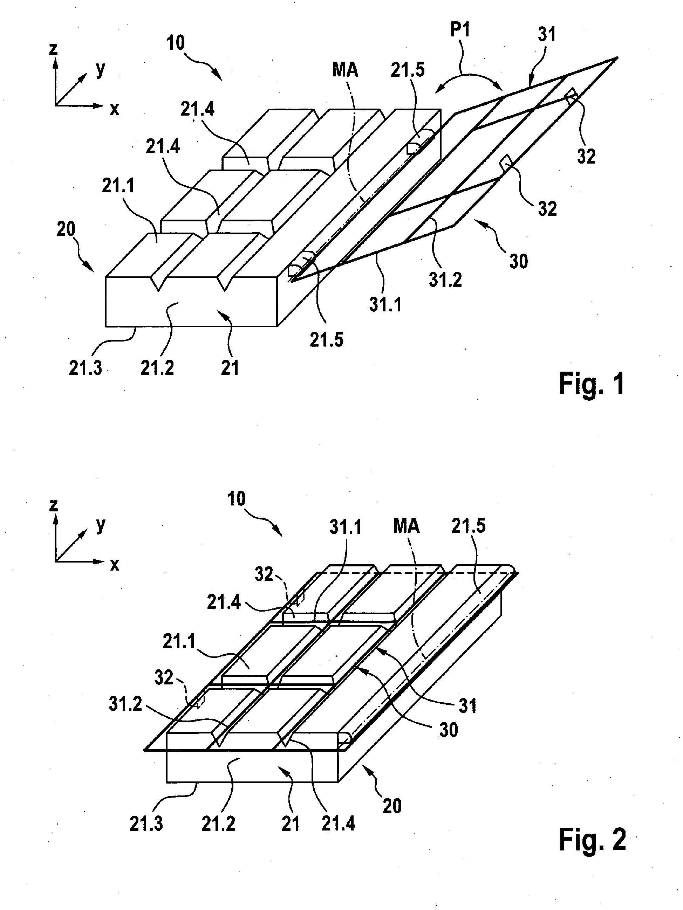

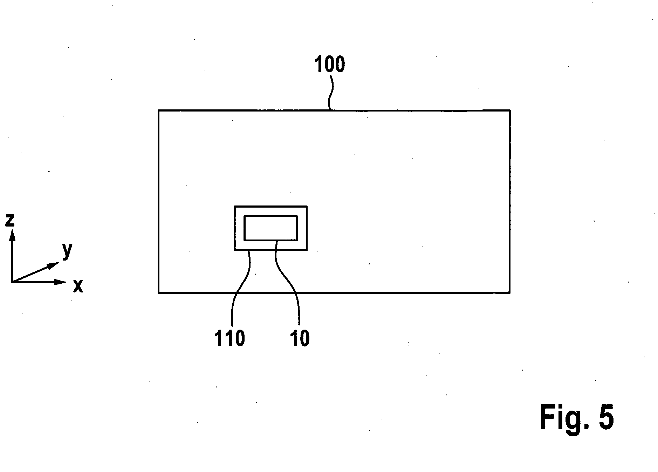

Fig. 1 - 3 each show a principle drawing of an assembly 10 according to an exemplary embodiment. The assembly 10 can be provided with a vehicle, more particularly with a car (as schematically indicated in Fig. 5).

The assembly 10 can have one or more functions. As an example, the assembly 10 can have an energy absorbing function. As such, the assembly 10 can be generally, configured to absorb energy and can, therefore, also be deemed or denoted energy absorbing assembly. Depending on its concrete application, the energy to be absorbed by the assembly can be generated in a situation of a crash, collision, impact, etc. of a superordinate unit which is provided with the assembly 10, for example. A non-limiting example of a respective superordinate unit is a vehicle, particularly a car, such that the energy to be absorbed by the assembly can be generated in a situation of a crash, collision, impact, etc. of a vehicle, particularly a car, for example. Yet, additional or alternate functions than an energy absorbing function are contemplated.

The assembly 10 comprises an energy absorbing device 20. In exemplary embodiments, the energy absorbing device 20 can also be deemed or denoted energy absorbing member. The energy absorbing device 20 extends in a first spatial direction (x-direction), a second spatial direction (y-direction) transverse to the first spatial direction, and a third spatial direction extending transverse to both the first and second spatial directions (z-direction).

The energy absorbing device 20 can have energy absorbing properties as it can be built from or comprise a material or material structure, respectively, namely a cellular material or a cellular material structure,respectively which has energy absorbing properties. As such, the energy absorbing device 20 can serve at least an energy absorbing function.

The energy absorbing device 20 comprises a base body 21. The base body 21 extends in the first spatial direction (x-direction), the second spatial direction (y-direction) transverse to the first spatial direction, and the third spatial direction extending transverse to both the first and second spatial directions (z-direction). The base body 21 can comprise one or more top portions 21.1, one or more side portions 21.2, and one or more bottom portions 21.3. Each of the one or more top portions 21.1, side portions 21.2, and bottom portions 21.3 can comprise a main extension plane. Each of the one or more top portions 21.1, side portions 21.2, and bottom portions 21.3 can comprise one or more walls or wall portions. Respective walls or wall portions can define the respective main extension plane of the respective one or more top portions 21.1, one or more side portions 21.2, and one or more bottom portions 21.3. The one or more top portions 21.1 and the one or more bottom portions 21.3 are arranged substantially opposite to each other in the exemplary embodiments. Likewise, one or more first side portions 21.2 (see e.g. the visible side portion 21.2 in Fig. 1) and one or more second side portions can be arranged substantially opposite to each other. The exemplary embodiment of Fig. 1 further shows that the one or more side portions 21.2 can be arranged with their respective main extension plane at an angle of 15° to 165°, particularly at an angle of (ca.) 90°, relative to the main extension plane of the one or more top portions 21.1 and/or relative to the main extension plane of the one or more bottom portions 21.3. As such, the base body 21 can have a substantially parallelepiped base shape. For the exemplary embodiment of a base body 21 with a substantially parallelepiped base shape, the first direction can correspond to a width or length direction of the base body 21, the second direction can correspond to a length or width direction of the base body 21, and the third direction can correspond to a height direction of the base body 21. Analogous considerations apply for other base shapes of the base body 21.

The base body 21 is made of or comprises an expanded cellular polymer material, particularly an expanded cellular polyolefin material, or an expanded cellular polymer material structure, particularly an expanded cellular polyolefin material structure. A respective expanded cellular polymer material and a respective expanded cellular polymer material structure typically, comprises amongst other characteristic properties - such as e.g. a low density, a low weight, a high stiffness-to-weight ratio, and anti-corrosion properties - energy absorbing properties. These energy absorbing properties can result in energy absorbing properties of the base body 21 and further in energy absorbing properties of the energy absorbing device 20.

The base body 21 can be a molded part, particularly a part made by molding, particularly by temperature-induced dry or wet molding, of an expandable or expanded cellular polymer material, Non-limiting examples of an expandable or expanded cellular polymer materials are olefin-based expandable or expanded cellular polymer materials such as polyethylene-based materials (ePE) and/or polypropylene-based materials (ePP) and/or olefinic thermoplastic-elastomers-based material (eTPO), styrene-based expandable or expanded cellular polymer materials such as polystyrene-based materials (ePS) and/or acrylonitrile -butadiene-styrene-based materials (eABS) and/or styrene acrylonitrile-based materials (eSAN), ester-based expandable or expanded cellular polymer materials, such as polycarbonate-based materials (ePC), polyethylene-terephthalate-based materials (ePET) and/or polybutylene terephthalate-based materials (ePBT) and/or polylactic-acid-based materials (ePLA) and/or polyhydroxyalkanoate based materials (ePHA), amide-based expandable or expanded cellular polymer materials such as polyamide based materials (ePA-materials), urethane-based expandable or expanded cellular polymer materials such as thermoplastic polyurethane-based materials (eTPU-materials), ether-based expandable or expanded cellular polymer materials such as polyphenylene-ether-based materials (ePPE). Further, expandable or expanded cellular polymers based on mixtures and/or blends and/or copolymer of at one or more of the aforementioned compositions are also conceivable. Respective expandable or expanded cellular polymers can comprise one or more recycled polymers, particularly recycled polyolefins. Respective expandable or expanded cellular polymers can comprise one or more functional agents or additives, such as e.g. reinforcing agents or additives, coloring agents or additives, etc. In a preferred example, the base body 21 is integrally molded from expanded polypropylene (ePP).

The assembly 10 further comprises a structural device 30 which can also be deemed or denoted structural member The structural device 30 can provide one or more functions, such as e.g. a connecting function of connecting the energy absorbing device 20 with a respective superordinate unit, e.g. with a body of a vehicle, an load absorbing function of absorbing static or dynamic (mechanical) forces, loads, vibrations etc., a load introducing function of introducing static or dynamic (mechanical) forces, loads, vibrations, etc. into the energy absorbing device 20, etc. The dimensions of the structural device 30 can extend beyond the dimensions of the base body 21 in one or more spatial directions. The structural device 30 can preferably be made from a material stiffer than the cellular polymer material of the base body 21.The structural device 30 is preferably made from a stiff material such as e.g. a metal including iron, iron alloys, copper, copper alloys, aluminum and/or aluminum alloys or a resin material or a ceramic material.

As is apparent from Fig. 1, the structural device 30 can comprise one or more portions (see e.g. the frame structure elements 31.1, 31.2) which extend, at least in the assembled state of the assembly 10 in which the structural device 30 is connected to the base body 21 in an intended manner, in a first spatial direction (x-direction), a second spatial direction (y-direction) transverse to the first spatial direction; and a third spatial direction extending transverse to both the first and second spatial directions (z-direction). The Fig. indicates that at least one of: the first spatial direction, the second spatial direction, and the third spatial direction of the structural device 30 can correspond to at least one of: the first spatial direction, the second spatial direction, and the third spatial direction of the base body 21 in the assembled state of the assembly 10.

In the exemplary embodiments shown in the Fig., the structural device 30 is or comprises a frame structure 31 comprising one or more longitudinal frame structure elements 31.1, 31.2, such as e.g. beams, webs, etc., extending in two or more spatial directions, particularly in a common plane. Particularly, the frame structure 31 comprises one or more first longitudinal frame structure elements 31.1 extending in the first direction and one or more second longitudinal frame structure elements extending in the second direction. The frame structure 31 can thus, have a configuration with one or more first longitudinal frame structure elements 31.1, such as beams, webs, etc., extending in the first spatial direction and one more second longitudinal frame structure elements 31.2, such as beams, webs, etc., extending in the second spatial direction, which can be transverse to the first spatial direction. Notably, the first spatial direction can substantially correspond to the first spatial direction of the base body 21 and the second spatial direction can substantially correspond to the second spatial direction of the base body 21 at least in the assembled state of the assembly 10. Such a configuration of a frame structure 31 can be deemed or denoted a grid-configuration. In either case, the frame structure 31 can be configured, e.g. due to its geometric configuration and/or arrangement within the assembly 10, to provide at least one of the aforementioned functions..

As another example (not expressly shown in the Fig.), the at least one structural device 30 can be or comprise a plate structure comprising one or more plate structure elements extending in one or more spatial directions, particularly in a common plane. In either case, the plate structure can be configured, e.g. due to is geometric configuration and/or arrangement within the assembly 10, to provide at least one of the aforementioned functions. The plate structure can be a plate structure made from a stiff material such as e.g. a metal including iron, iron alloys, copper, copper alloys, aluminum and/or aluminum alloys or a resin material or a ceramic material, more particularly a steel plate structure.

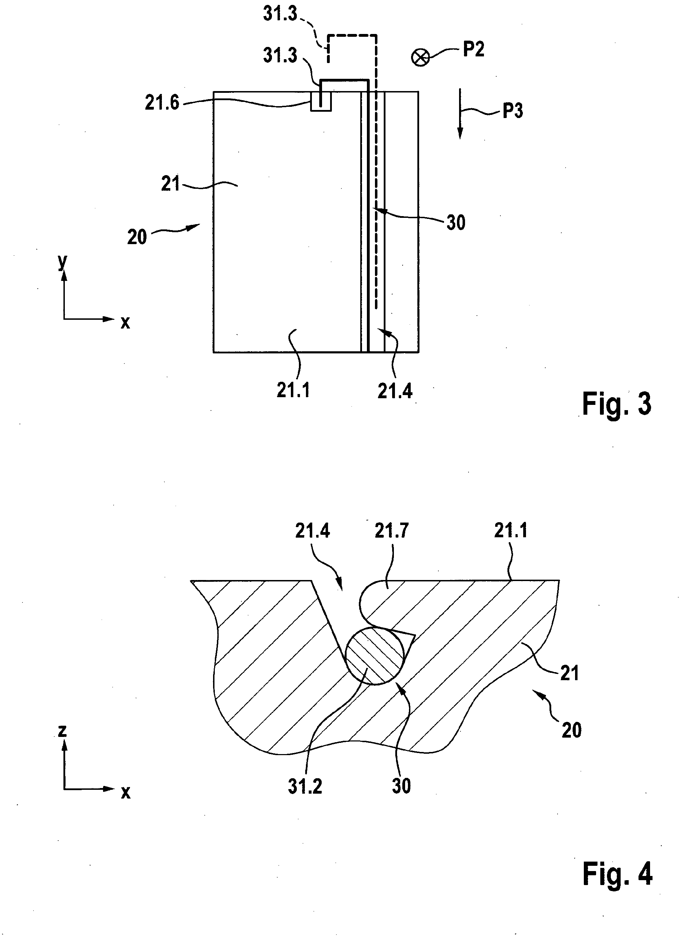

The base body 21 is provided with or comprises at least one receiving portion 21.4 (see also the enlarged view of Fig. 4) configured to at least partly receive at least one portion, e.g. a respective first or second longitudinal frame structure element 31.1, 31.2, of the structural device 30. Particularly, the at least one receiving portion 21.4 is configured to at least partly receive at least one portion of the structural device 30 such that when the at least one portion of the at least one structural device 30 is at least partly received in the at least one receiving portion 21.4, the at least one portion of the structural device 30 is secured against motion in at least two degrees of freedom of motion. More particularly, the at least one receiving portion 21.4 is configured to at least partly receive at least one portion of the structural device 30 such that when the at least one portion of the structural device 30 is at least partly received in the at least one receiving portion 21.4, the at least one portion of the structural device 30 is secured against motion in at least two degrees of freedom of motion in the first spatial direction, in the second spatial direction, and typically, also in the third spatial direction. The at least one receiving portion 21.4 thus, comprises a special configuration which enables, when the at least one portion of the structural device 30 is at least partly received in the at least one receiving portion 21.4, that the at least one portion of the structural device 30 is secured against motion in at least two degrees of freedom of motion, particularly at least in the first spatial direction and in the second spatial direction, preferably also in the third spatial direction. At least one of the at least two degrees of freedom can be or comprise at least one transfer degree of freedom of motion as will be explained below. Hence, the at least one receiving portion 21.4 is generally configured to secure the structural device 30 against, particularly undesired, motions in respective degrees of freedom of motion which could compromise the functional integrity of the assembly 10, for example.

As is apparent from Fig. 4, the geometry of the at least one receiving portion 21.4 can be at least partially adapted to the shape of the respective portion of the structural device 30 which is to be received within the at least one receiving portion 21.4 or the respective portion of the structural device 30 which is factually at least partially received within the at least one receiving portion in a first state (see again Fig. 4) as will be described in more detail in the following. As an example, at least one of the length, width or height dimension of the at least receiving portion 21.4 can be adapted to at least one of the length, width or height dimension of at least the portion, which can be a respective longitudinal first or second frame structure element 31.1, 31.2, of the structural device 30 which is to be received within the at least one receiving portion 21.4 or the respective portion of the structural device 30 which is factually at least partially received within the at least one receiving portion 21.4 in the first state as will be described in the following. Likewise, the base shape of the at least one receiving portion 21.4 can be adapted to the base shape of at least the portion of the structural device 30 which is to be received within the at least one receiving portion 21.4 or the respective portion of the at least one structural device 30 which is factually at least partially received within the at least one receiving portion 21.4 in the first state as will be described in the following.

Fig. 2 shows an exemplary view in which a structural device 30 in the shape of a frame structure 30 comprising respective first and second longitudinal frame structure elements 31.1., 31.2 is in the first state. In this exemplary view, at least a part of each of the first and second longitudinal frame structure elements 31.1, 31.2 is received within a respectively assigned receiving portion 21.4 provided with the base body 21. Hence, the spatial arrangement of the receiving portions 21.4 provided with the base body 21 corresponds to the spatial arrangement of the first and second longitudinal frame structure elements 31.1., 31.2 of the frame structure 31 (and vice versa).

In either case, the at least one receiving portion 21.4 can be integrally formed with the base body 21. As such, the at least one receiving portion 21.4 can be built in a molding process in which the base body 20 is built by molding. Yet, it is generally conceivable that the at least one receiving portion 21.4 can be a separate component which is attached to the base body 21 or that it is built by machining, e.g. by milling, of the base body 21.

Further, the base body 21 is provided with or comprises at least one support portion 21.5 configured to co-act with the structural device 30, particularly with at least one respective longitudinal frame structure element 31.1, 31.2, such that the structural device 30 can be transferred, i.e. moved, in at least one transfer degree of freedom of motion in a first state (as indicated above) in which the at least one portion of the structural device 30 is received within at least one receiving portion 21.4, particularly within a receiving portion 21.4 which is, e.g. due to a specific geometry, particularly a specific shape, assigned to the structural device 30.

In either case, the at least one support portion 21.5 can be integrally formed with the base body 21. As such, the at least one support portion 21.5 can be built in a molding process in which the base body 21 is built by molding. Yet, it is generally conceivable that the at least one support portion 21.5 can be a separate component which is attached to the base body 21 or that it is built by machining, e.g. by milling, of the base body 21.

As indicated in Fig. 1, the at least one support portion 21.5 enables an easy and reliable assembly process of the assembly 10 which comprises, via the at least one support portion 21.5, transferring the structural device 30 in the respective first state by moving same in the at least one transfer degree of freedom (indicated by the double-arrow P1 in Fig. 1) relative to the base body 21. Particularly, the at least one support portion 21.5 can enable an easy and reliable assembly process of the assembly 10 which can comprise, via the at least one support portion 21.5, transferring the structural device 30 by moving same in the at least one transfer degree of freedom from a second state in which the respective portion(s) of the structural device 30 are not received within the respective assigned receiving portion(s) 21.4, into the first state in which the respective portion(s) of the structural device 30 are at least partially received within the respective assigned receiving portion(s) 21.4.

The at least one support portion 21.5 can thus, enable a moveable support of the structural device 30 relative to the base body 21, particularly for transferring the structural device 30 in the first state by moving same in the at least one transfer degree of freedom from a second state in which the respective portion(s) of the structural device 30 are not received within the respective assigned receiving portions 21.4, into the first state in which the respective portion(s) of the structural device 30 are at least partially received within the respective assigned receiving portion(s) 21.4.

Hence, the at least one support portion 21.5 can provide the base body 21 with a kinematic or with a kinematic function which enables a transfer or motion, respectively of the structural device 30 in the at least one transfer degree of freedom of motion in a first state (as indicated above) in which the respective portion(s) of the structural device 30 are received within respective assigned receiving portion(s) 21.4, particularly within respective assigned receiving portion(s) 21.4 which are, e.g. due to a specific geometry, particularly a specific shape, assigned to the respective portion(s) of the structural device 30. It is apparent from above that, before transferring the structural device 30 in the first state, the structural device 30 can be in a second state in which the respective portion(s) of the structural device 30 are not received within the receiving portion(s) 21.4.

As is apparent from the Fig., the at least one support portion 21.5 can comprise one or more contact points for contacting at least one counter-support portion of the structural device 30 which is to be transferred in the first state. Particularly, respective contact points can be or comprise support points or support areas against which at least one counter-support portion of the structural device 30 can be at least temporarily supported and/or via which the at least one counter-support portion of the structural device 30 can be at least temporarily supported. The structural device 30 can thus, comprise one or more counter-support portions configured to co-act with respective one or more support portions 21.5 of the base body 21. A respective counter-support portion of the structural device 30 can be provided with a first and/or second longitudinal frame structure element 31.1, 31.2, for example. Respective contact points or support areas can define at least one motion axis MA along which and/or about which the structural device 30 can be moved in the at least one transfer degree of freedom of motion for moving same from the first state to a respective second state or vice versa.

It is apparent from the above that the first state can generally comprise a first orientation and/or position of at least the respective portion(s) of the structural device 30 which is to be received in the respective receiving portion(s) 21.4 or the (entire) structural device 30, particularly relative to the base body 21. Likewise, the second state can generally comprise a second orientation and/or position of the portion(s) of the structural device 30 which is to be received in the respective receiving portion(s) or the (entire) structural device 30, particularly relative to the base body 21.

The at least one support portion 21.5 is thus, configured, e.g. due to a specific geometry, particularly a specific shape, to enable, in connection with an assembly process of the assembly 10, a concerted motion of the structural device 30 relative to the base body 21 which moves the respective portions of the structural device 30 into the respective receiving portion(s) 21.4 and thus, transfers the structural device 30 in its first state. This enables realizing a novel assembly process of the assembly 10 which does not require complex tool constructions as the assembly process can simply comprise at least temporarily moveably supporting the structural device 30, particularly via respective one or more counter-support portions, e.g. at the one or more support portions of the base body 21 and conducting the described specific concerted motion of the structural device 30 relative to the base body 21 (as indicated by double-arrow P1) which moves the portion(s) of the structural device 30 into the receiving portion(s) 21.4 of the base body 21 and thus, transfers the structural device 30 in its first state.

Notably, the assembly process of the assembly 10 can be done manually, e.g. via assembly personnel, and/or automatically, e.g. via one or more assembly robots.

As is particularly apparent from the perspective views of Fig. 1 and 2, the at least one support portion 21.5 of the base body 21 can be built as or comprise at least one projection projecting off the base body 21 in at least one spatial direction, particularly at least in the first and/or second direction. As is apparent from the perspective view of Fig. 1, the base body 21 can be provided with multiple distinct support portions 21.5 and projections, respectively. The multiple distinct support portions 21.5 and projections, respectively can be arranged in a line, e.g. in a straight line, on the same side of the base body 21. The line can extend in the first or second direction, for example. The base body 21 can thus, comprise multiple distinct support portions 21.5 and projections, respectively which are adjacently arranged in a line, e.g. in a straight line, on the same side of the base body 21. The line can extend in the first or second direction along at least 50% of the spatial extension of the respective side of the base body 21. In such a configuration, the spatial extension of each of the projections along the respective side of the base body is less than 50% of the spatial extension of the respective side of the base body 21. As is apparent from the perspective views of Fig. 2, the base body 30 can comprise at least one continuous projection which extends along at least 50% of the spatial extension of the respective side of the base body 21. In either case, the arrangement and design of the one or more projections can define a motion axis along which and/or about which the structural device 30 can be moved so as to transfer it into the first state.

In the exemplary embodiment of Fig. 1, the motion axis is a rotational axis because it allows for a better securing of the structural device 30 within the assembly 10, e.g. in the scenario of a crash of a vehicle 100, as the crash typically rather leads to a translational motion than a rotational motion. As such, it is preferable that the at least one transfer degree of freedom of motion is or comprises a rotational degree of freedom of motion about a rotational axis (as exemplarily indicated by the arrow P1 in Fig. 1).

As such, the at least one transfer degree of freedom of motion can be or comprise a translational degree of freedom of motion along a translational axis and/or a rotational degree of freedom of motion about a rotational axis (as indicated in Fig. 1). As such, the at least one support portion 21.5 can be configured to co-act with the structural device 30 such that the structural device 30 can be moved in at least one translational and/or rotational degree of freedom of motion in the first state in which the respective portion(s) of the structural device 30 are received within at the respective assigned receiving portion(s) 21.4.

A respective rotational degree of freedom can comprise a rotational motion, such as e.g. a pivot motion, of at least one portion of the structural device 30, such as e.g. a longitudinal first or second frame structure element 31.1, 31.2, into the respective receiving portion(s) 21.4, thereby transferring the structural device 30 in the first state. A respective rotational axis can e.g. extend in at least one of the first spatial direction and the second spatial direction. A respective rotational axis can be defined by the at least one support portion 21.5 of the base body 21 and/or by at least one respective counter-support portion of the structural device 30. Yet, it is also conceivable that a respective rotational axis can be defined otherwise, e.g. by a portion of an assembly device used for assembling the assembly 10, particularly for transferring the structural device 30 in the first state.

A respective translational degree of freedom can comprise a translational motion, such as e.g. a sliding motion, of at least one portion of the structural device 30, such as e.g. a longitudinal first or second frame structure element 31.1, 31.2, into the respective receiving portion(s) 21.4, thereby transferring the structural device 30 in the first state. A respective translational axis can e.g. extend in at least one of the first spatial direction, the second spatial direction, and the third spatial direction, for example. A respective translational axis can be defined by the at least one support portion 21.5 of the base body 21 and/or by at least one respective counter-support portion of the structural device 30, for example. Yet, it is also conceivable that a respective translational axis can be defined otherwise, e.g. by a portion of an assembly device used for assembling the assembly 10, particularly for transferring the structural device 30 in the first state.

As is indicated in the top view of Fig. 3, it is conceivable that the structural device 30 is moveable in two different transfer degrees of freedom of motion e.g. for transferring it into the first state or out of the first state. As such, it is conceivable that a combined motion of the structural device 30 in two different transfer degrees of freedom of motion is required for transferring it into the first state and/or out of the first state.

As is exemplarily shown for one portion of the structural device 30 and an assigned receiving potion 21.4 in Fig. 3, the structural device 30 can be moveable supported in a first translational degree of freedom of motion (indicated by arrow P2) and in a second translational degree of freedom of motion (indicated by arrow P3), which can be different from the first translational degree of freedom of motion. As such, the first translational degree of freedom of motion can comprise a motion along a first translation axis, e.g. extending in the third direction, and the second translational degree of freedom of motion can comprise a motion along a second translation axis, e.g. extending in the second direction, for example. At least one motion of the structural device can comprise a motion of at least one portion of the at least one structural device 30 which is already received in the receiving portion 21.4 (as indicated by the dotted line in Fig. 3). Thus, a respective first translational motion can comprise a motion of at least one portion of the structural device 30 into the receiving portion 21.4 and a respective second translational motion can comprise a translational motion of the or at least one portion of the structural device 30 within the receiving portion 21.4. As such, a respective second translational degree of freedom of motion can comprise a translation motion of at least one of portion of the structural device 30 within the receiving portion 21.4. In such a manner, an engagement element 31.3, such as e.g. a hook, provided with the structural device 30 can be engaged with a corresponding counter engagement element 21.6, such as e.g. a receptacle, provided with the base body 21, for example.

As another example, the structural device 30 can be moveable supported in a first rotational degree of freedom of motion and in a second rotational degree of freedom of motion, which can be different from the first rotational degree of freedom of motion. As a more concrete example, the first rotational degree of freedom of motion can comprise a motion along about a first rotation axis, e.g. extending in at least one of the first direction, the second direction, and the third direction, and the second rotational degree of freedom of motion can comprise a motion about a second rotation axis, e.g. extending in at least one of the first direction, the second direction, and the third direction, which is different from the first rotation axis. At least one motion of the structural device 30 can comprise a motion of at least one portion of the at least one structural device 30 which is already received in the receiving portion 21.4. Thus, a respective first rotational motion can comprise a motion of at least one portion of the structural device 30 into the receiving portion 21.4 and a respective second rotational motion can comprise a rotational motion of the or at least one portion of the structural device 30 within the receiving portion 21.4. As such, a respective second rotational degree of freedom of motion can comprise a rotation motion of at least one of portion of the structural device 30 within the receiving portion 21.4. In such a manner, an engagement element 31.3, such as e.g. a hook, provided with the structural device 30 can be engaged with a corresponding counter engagement element 21.6, such as e.g. a receptacle, provided with the base body 21, for example.

As another example, combined translational and rotational motions of the structural device 30 are conceivable. As such, a respective first degree of freedom of motion can comprise a translational motion along a translational axis, e.g. extending in at least one of the first direction, the second direction, and the third direction, and a second degree of freedom of motion can comprise a rotational motion about a rotation axis, e.g. extending in at least one of the first direction, the second direction, and the third direction, or vice versa. As an example, a respective first motion can comprise a motion of at least one portion of the structural device 30 into the receiving portion and a respective second motion can comprise a translational or rotational motion of the at least one portion of the structural device 30 within the receiving portion 21.4. In such a manner, an engagement element 31.3, such as e.g. a hook, provided with the structural device 30 can be engaged with a corresponding counter engagement element 21.6, such as e.g. a receptacle, provided with the base body 21, for example.

It is apparent from the above, that the structural device 30 can comprise at least one engagement element 31.3, such as e.g. a hook, which is configured to engage with or be engaged with a corresponding counter engagement element 21.6, such as e.g. a receptacle, provided with the base body 21.

The Fig. show that the at least one receiving portion 21.4 can be built as or comprise at least one groove or groove-like recess. As such, the base body 21 can be provided with or comprise one or more grooves or groove-like recesses which serve as a respective receiving portion 21.4. Respective grooves or groove-like recesses can be provided with a freely exposed surface of the base body 21. In the exemplary embodiments of the Fig., respective grooves or groove-like recesses can be provided with at least one freely exposed surface of a top portion 21.1 of the base body 21, for example.

The Fig. further show that respective grooves or groove-like recesses can extend in at least one of the first spatial direction, the second spatial direction, and the third spatial direction, for example. Particularly, respective groove or groove-like recesses can, in any case, extend in the third spatial direction (to define a depth dimension) and in at least one of the first and the second direction (to define a longitudinal dimension). As such, the at least one receiving portion 21.4 typically, has an extension in the third spatial direction which enables that the at least one portion of the structural device 30, which can be or comprise a longitudinal frame structure element, such as e.g. a beam, in an exemplary embodiment of the frame structure, can be received and secured against a motion in the at least one two degrees of freedom of motion. Respective grooves or groove-like recesses can thus, generally extend in at least one or more different spatial directions. As such, respective grooves or groove-like recesses do not necessarily have a straight shape. Respective grooves or groove-like recesses can thus, have at least one of: one or more straight portions, one or more curved portions, one or more inclined portions, for example.

It is also conceivable that respective grooves or groove-like recesses can extend at an angle, e.g. an acute angle, a right angle, or an obtuse angle, relative to at least one of the first spatial direction, the second spatial direction, and the third spatial direction.

As is apparent from Fig. 4, respective grooves or groove-like recesses can comprise a varying cross-sectional geometry. Particularly, respective grooves or groove-like recesses can comprise a tapering cross-sectional geometry which tapes from an opening portion towards a bottom portion of the respective groove or groove-like recess. Respective grooves or groove-like recesses can therefore, have a T- or V-shaped cross-sectional geometry, for example. Other cross-sectional shapes are contemplated.

As is exemplarily shown in Fig. 2, the base body 21 can comprise multiple receiving portions 21.4 (substantially) extending in the same direction or in different directions. As such, the base body 21 can be provided with or comprise an arrangement of receiving portions 21.4 (substantially) extending in the same direction and/or in different directions. As an example, at least two receiving portions 21.4 can be (substantially) arranged and extend in parallel. Particularly, at least two receiving portions.21.4 can be (substantially) arranged and extend in parallel in the first spatial direction and/or in the second spatial direction (see Fig. 2). Additionally or alternatively, at least two, more than two or all receiving portions 21.4 can be (substantially) arranged and extend in an angle different 180°, e.g. at at least one of: an acute angle, a right angle, or an obtuse angle, relative to each other. As is exemplarily shown in Fig.2, the base body 21 can comprise multiple receiving portions 21.4 extending in a right angle (90°) towards each other.

With respect to their respective extension in the third direction (depth direction), at least two, more than two or all receiving portions 21.4 can have the same or a different extension. As such, the at least two, more than two or all receiving portions 21.4 can have the same or a different depth. In either case, the depth of a respective receiving portion 21.4 can be related with a degree of securing a respective portion of the structural device 30 against undesired removal from the respective receiving portion 21.4. Typically, bigger depths can provide a higher degree of securing a respective portion of the structural device 30 against undesired removal from the respective receiving portion. As an example, one or more receiving portions 21.4 can have a depth of at least 1 cm, particularly at least 2 cm, more particularly at least 3 cm, more particularly at least 4 cm, more particularly at least 5 cm.

Fig. 4 further shows that the base body 21 can be provided with or comprise at least one locking element 21.7 assigned to the receiving portion 21.4. The at least one locking element 21.7 can be configured to detachably lock the at least one portion of the structural device 30, particularly a longitudinal portion of the structural device 30 such as e.g. a beam, a web, etc., which is, in the first state, received in the at least one receiving portion 21.4, within the at least one receiving portion 21.4. Particularly, the at least one locking element 21.7 can be configured to detachably lock a portion of the structural device 30 received in the at least one receiving portion 21.4 within the at least one receiving portion 21.4, against a motion in at least one degree of freedom of motion, particularly against a motion with which the at least one structural device 30 could be moved out of the at least one receiving portion 21.4, such as e.g. a translational motion in the third direction. The at least one degree of freedom of motion can comprise the same or a different degree of freedom of motion as the one against which the at least one portion of the structural device 30 is secured in the first state. More particularly, the at least one locking element 21.7 can be configured to detachably lock a portion of the structural device 30 received in the at least one receiving portion 21.4 within the at least one receiving portion 21.4, against any motion such that the portion of the structural device 30 is fully secured within the at least one receiving portion 21.4 which means that the portion of the structural device 30 is not only secured with respect to an undesired loss but also secured with respect to its orientation and/or position within the at least one receiving portion 21.4.

As is indicated in Fig. 4, the at least one locking element 21.7 can be or comprise a positive-locking element, particularly comprising a projection, at least partly extending, e.g. in at least one of the first direction, the second direction and the third direction, into a receiving space defined by the at least one receiving portion. A respective positive-locking element 21.7 can be or comprise a snap-fit element, for example. A respective snap-fit element can be a projection projecting of a wall of the base body 21 or a recess provided with a wall of the base body 21, for example. Particularly, a respective snap-fit element can be a projection projecting of a wall of the base body 21 or a recess provided with a wall of the base body 21 which extends which extends in at least one of the first direction, the second direction and the third direction.

The at least one locking element 21.7 can be integrally formed with the base body 21 which can be effected during molding of the base body 21, for example. As such, the base body 21 can be provided with a respective locking function through molding which also allows for a stable attachment of the at least one locking element 21.7 to the base body 21. Yet, it is generally conceivable that a respective locking element 21.7 can be a separate component which is attached to the base body 21.

In the assembly 10 exemplified in the Fig, the at least one locking element 21.7 is a snap-fit element which is integrally formed within the base body 21. In such a case, it is possible to securely embed or integrate the structural element 30 into the base body 21 without addition of time-consuming and costly process steps, such as e.g in-mold overmolding of the structural element 30 or securing of the structural element 30 within the at least one receiving portion 21.4 by screwing, bolting, resin casting, etc.

In either embodiment, the assembly 10 can be configured as a component of a vehicle, particularly of a car (as is indicated in the schematic view of Fig. 5 which show the vehicle as box 100). Particularly, the assembly 10 can be configured as an anti-submarining ramp of a vehicle 100, particularly a car, or at least as a part of an anti-submarining ramp of a vehicle 100, particularly of a car. A respective anti-submarining ramp can form part of a an anti-submarining seat assembly which typically, comprises a forward-facing (with respect to the normal forward drive direction of a vehicle), upwardly-inclined ramp-like energy absorbing device which is to be arranged in the base of a seat of the vehicle 100 such that a passenger will be, particularly due to the arrangement and/or geometry of the energy absorbing device, in the event of a crash of the vehicle 100 pushed into the seat cushion and inhibited from slipping under a restraint, such as e.g. a belt, which reduces the risk of injury. With respect to such an anti-submarining seat assembly, the energy absorbing device 20 of the assembly 10 can thus, be or comprise an anti-submarining ramp and the structural device 30 can serve for reinforcing the anti-submarining ramp and/or for connecting the energy absorbing device 20 with a vehicle structure, such as e.g. a vehicle body.

As is further indicated in Fig. 5, an anti-submarining seat assembly can comprise a seat bottom 110 which may include a respective anti-submarining ramp and a cushion. The cushion may cover the anti-submarining ramp. The anti-submarining ramp may be stiffer, i.e., require a greater force to compress than the cushion. The shape of the anti-submarining ramp may slope upward in a seat-forward direction (forward drive direction). The anti-submarining ramp may optionally include a crest at a maximum height of the anti-submarining ramp. The crest may be disposed more than halfway forward relative to the seat bottom. Further, the crest of the anti-submarining ramp may be positioned below thighs and forward of hips of an occupant who is 50th percentile in height. The anti-submarining ramp may extend across a front end of the seat bottom in a lateral direction relative to the seat.

As is apparent from above, the assembly 10 can comprise at least one fastening element 32, wherein the at least one fastening element 32 is configured to fasten, particularly detachably fasten, the energy absorbing device 20, particularly the base body 21, to a structure of the vehicle 100, particularly a car, which is intended to include or which includes the assembly 10 (see e.g.

Fig. 5). Respective fastening elements 32 can be or comprise wire elements, e.g. for a front and rear fastening of the assembly 10 with a superordinate unit, such as e.g. a vehicle 100. One, more, or all respective fastening elements 32 can be provided with the structural device 30. The structural device 30 can thus, comprise portions, e.g. clamp-shaped portions, hook-shaped portions, etc., which act as respective fastening elements 32 (indicated in Fig. 1) configured to detachably fasten the energy absorbing device 20, particularly the base body 21, to a structure of the vehicle 100, particularly a car, which is intended to include or which includes the assembly 10. When the fastening element 32 is fastened, the structural device 30 is secured in all degrees of freedom of motion within the vehicle 100, so that the structural device 30 cannot be removed from the vehicle 100, particularly a car, particularly in the event of a crash.

A method of assembling the assembly 10 can comprise at least the following steps: at least one receiving step in which at least one portion of a structural device 30, particularly a longitudinal frame structure element, such as e.g. a beam, of a frame structure 31, is at partly received in at least one receiving portion 21.4 of the base body 21 of the energy absorbing device 20 such that the at least one portion of the structural device 30 is secured against motion in at least two degrees of freedom of motion, particularly in the first spatial direction and/or in the second spatial direction. The receiving step may thus, comprise transferring the structural device 30 in at least one transfer degree of freedom of motion in a first state in which the at least one portion of the structural device 30 is received within at least one receiving portion 21.4, particularly at least one receiving portion 21.4 which is, e.g. due to a specific geometry, assigned to the structural device 30.

Optionally, the method may further comprise a step of locking the structural device 30 within the at least one receiving portion 21.4. The locking may be accomplished via one or more respective locking elements 21.7.

## Claims

1. An assembly, comprising: at least one structural device, and
an energy absorbing device, wherein the energy absorbing device comprises a base body made from an expanded cellular polymer material, wherein the base body is provided with at least one receiving portion configured to at least partly receive at least one portion of the at least one structural device such that when the at least one portion of the at least one structural device is at least partly received in the at least one receiving portion, the at least one portion of the at least one structural device is secured against motion in at least two degrees of freedom of motion, wherein the base body is provided with at least one support portion configured to co-act with the at least one structural device such that the at least one structural device can be transferred in at least one transfer degree of freedom of motion in a first state in which the at least one portion of the at least one structural device is received within at least one receiving portion, particularly a receiving portion which is, e.g. due to a specific geometry, assigned to the at least one portion of the at least one structural device.

2. The assembly of claim 1, wherein the at least one transfer degree of freedom of motion comprises a translational degree of freedom of motion along a translational axis and/or a rotational degree of freedom of motion about a rotational axis.

3. The assembly of claim 1 or 2, wherein the at least one structural device is or comprises a frame structure comprising one or more longitudinal frame structure elements, such as e.g. beams, extending in two or more spatial directions.

4. The assembly of any one of the preceding claims, wherein the at least one receiving portion is built as or comprises at least one groove or groove-like recess.

5. The assembly of any one of the preceding claims, wherein the at least one receiving portion extends in at least one of: the first spatial direction and the second spatial direction.

6. The assembly of any one of the preceding claims, further comprising multiple receiving portions extending in the same direction or in different directions.

7. The assembly of claim 6, wherein at least two receiving portions substantially extend in parallel, particularly in the first spatial direction or in the second spatial direction.

8. The assembly of any one of the preceding claims, further comprising at least one locking element assigned to the at least one receiving portion, wherein the at least one locking element is configured to detachably lock a portion of the at least one structural device, particularly a longitudinal frame structure element, received in the at least one receiving portion within the at least one receiving portion.

9. The assembly of claim 8, wherein the at least one locking element is or comprises a positive-locking element, particularly a projection at least partly extending into a receiving space defined by the at least one receiving portion.

10. The assembly of any one of the preceding claims, wherein the at least one support portion is built as or comprises at least one projection projecting off the base body.

11. The assembly of any one of the preceding claims, wherein it is configured as a component of a vehicle, particularly of a car.

12. The assembly of claim 11, wherein it is configured as an anti-submarining ramp of a vehicle or at least as a part of an anti-submarining ramp of a vehicle.

13. The assembly of claim 11 or 12, further comprising at least one fastening element, wherein the at least one fastening element is configured to fasten, particularly detachably fasten, the energy absorbing device and/or the at least one structural device to a structure of the or a vehicle which is intended to include or which includes the assembly.

14. A device for an assembly of any one of the preceding claims, the energy absorbing device comprising: a base body made from an expanded cellular polymer material, wherein the base body is provided with at least one receiving portion configured to at least partly receive at least one portion of at least one structural device, particularly a longitudinal frame structure element of a frame structure, such that when the at least one portion of the at least one structural device is at least partly received in the at least one receiving portion, the at least one portion of the at least one structural device is secured against motion in at least two degrees of freedom of motion, particularly in the first spatial direction and in the second spatial direction, and wherein the base body is provided with at least one support portion configured to co-act with the at least one structural device such that the at least one structural device can be transferred, particularly moved, in at least one transfer degree of freedom of motion in a first state in which the at least
one portion of the at least one structural device is received within at least one receiving portion, particularly a receiving portion which is, e.g. due to a specific geometry, assigned to the respective at least one portion of the at least one structural device.

15. A vehicle comprising at least one assembly according to any one of claims 1 - 14.

16. A method of assembling an assembly according to any one of claims 1 - 14, wherein the method comprises at least the following steps:
- a receiving step in which at least one portion of at least one structural device, particularly a longitudinal frame structure element of a frame structure, is at least partly received in at least one receiving portion of the base body of the energy absorbing device such that the at least one portion of the at least one structural device is secured against motion in at least two degrees of freedom of motion, wherein the receiving step comprises transferring, particularly moving, the at least one structural device in at least one transfer degree of freedom of motion in a first state in which the at least one portion of the at least one structural device is received within at least one receiving portion, particularly a receiving portion which is, e.g. due to a specific geometry, assigned to the at least one structural device;
- optionally locking the at least one structural device within the at least one receiving portion via at least one locking element.
